# EUROPÄISCHE PATENTSCHRIFT

(11) **EP 3 870 924 B1**
(45) Veröffentlichungstag und Bekanntmachung des Hinweises auf die Patenterteilung: **23.11.2022**
(21) Anmeldenummer: 19790142.4
(22) Anmeldetag: 10.10.2019
(51) Int. Cl.: F28F 27/00, F28D 9/00, F28D 7/02, G06F 30/23

(54) **VERFAHREN ZUR THEORETISCHEN ANALYSE EINES FLUIDDURCHSTRÖMTEN VERFAHRENSTECHNISCHEN APPARATS**
METHOD FOR THEORETICAL ANALYSIS OF A PROCEDURAL APPARATUS WITH FLUID FLOWING THROUGH IT
PROCÉDÉ D'ANALYSE THÉORÉTIQUE D'UN APPAREIL TECHNIQUE PARCOURU PAR UN FLUIDE

(30) Priorität: 26.10.2018 EP 18020558
(43) Veröffentlichungstag der Anmeldung: 01.09.2021
(73) Patentinhaber: Linde GmbH, 82049 Pullach (DE)
(72) Erfinder: HÖLZL, Reinhold, 82538 Geretsried (DE); WOITALKA, Alexander, 81369 München (DE)
(74) Vertreter: Meilinger, Claudia Sabine
(86) Internationale Anmeldenummer: PCT/EP2019/025340
(87) Internationale Veröffentlichungsnummer: WO 2020/083521

(56) Entgegenhaltungen:
- EP-A1- 1 830 149
- EP-A1- 3 282 213
- DE-A1-102008 052 875
- DE-A1-102010 031 285
- US-A1- 2012 271 566
- US-A1- 2015 057 987

## Beschreibung

Die Erfindung betrifft ein Verfahren zur theoretischen Analyse eines fluiddurchströmten verfahrenstechnischen Apparats sowie eine Recheneinheit und ein Computerprogramm zu dessen Durchführung.

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen. Fluiddurchströmte verfahrenstechnische Apparate, wie z.B. vakuumgelötete (Aluminium-) Plattenwärmeübertrager (engl. "plate fin heat exchanger", PFHE) oder spiralgewickelte Wärmeaustauscher (engl. "coil-wound heat exchanger", CWHE) werden oftmals in verfahrenstechnischen Anlagen aufgrund einer Vielzahl von Vorzügen (Wärmeintegration, Kompaktheit, Kosten) eingesetzt.

Mittels numerischer Modelle bzw. Simulationen, üblicherweise einer Finite-Elemente-Methode, können derartige Apparate theoretisch nachgebildet und untersucht werden.

In der Patentanmeldung mit der Veröffentlichungsnummer EP 1 830 149 A1 ist ein Verfahren gemäß Oberbegriff des Anspruchs 1 dargestellt.

Beispielsweise können auf diese Weise im Zuge einer Planungs- bzw. Auslegungsphase des Apparats vor dessen Bau und Inbetriebnahme verschiedene konstruktive Varianten getestet und auf Verbesserungspotential hin untersucht werden. Ebenso kann der Apparat beispielsweise auch bereits in Betrieb genommen sein und mit Hilfe derartiger Simulationen kann der laufende Betrieb des Apparats überwacht oder dessen zukünftige Entwicklung untersucht werden, beispielsweise um sich andeutende Beschädigungen erkennen zu können.

Es hat sich gezeigt, dass bei diesen Simulationen insbesondere die Kontaktstellen benachbarter Körper, beispielsweise zwischen Finnen und Platten eines PFHE oder zwischen nebeneinander liegenden Rohren eines CWHE, teilweise unüberwindliche Hindernisse darstellen. Hat man es nämlich bei einer FEM mit mehr als einem Körper (zusammengebaute Struktur) zu tun, so besteht die Möglichkeit des Körperkontaktes infolge Verformung. Zur Behandlung der dabei auftretenden mechanischen Effekte wie Stoßeffekte, Grenzflächendeformationen, Haftung, Reibung oder wieder Trennung der Körper infolge eines Körperkontakts dienen so genannte *finite Kontaktelemente.*

Mit Kontaktelementen werden üblicherweise der Körperkontakt und die Übertragung der dabei auftretenden Kräfte rechnerisch erfasst. Da die Natur dieser Berechnung nichtlinear ist, sind Konvergenzprobleme und Berechnungsabbrüche häufig die Folge. Insbesondere tritt hierbei das nicht lösbare Problem auf, dass die Kontakttoleranzen für eine akzeptable Genauigkeit idealerweise im Bereich einiger Mikrometer liegen sollten, die Verformungen des verfahrenstechnischen Apparats durch die großen Massen aber im Bereich von Millimetern liegen. Dies führt zu nicht überwindbaren Hürden im Zuge der rechnerischen Simulationen.

### Offenbarung der Erfindung

Vor diesem Hintergrund schlägt die vorliegende Erfindung ein Verfahren zur theoretischen Analyse eines fluiddurchströmten verfahrenstechnischen Apparats sowie eine Recheneinheit und ein Computerprogramm zu dessen Durchführung mit den Merkmalen der unabhängigen Patentansprüche vor. Vorteilhafte Ausgestaltungen sind Gegenstand der Unteransprüche sowie der nachfolgenden Beschreibung.

Der fluiddurchströmte verfahrenstechnische Apparat kann insbesondere als ein Wärmetauscher ausgebildet sein, insbesondere als ein Plattenwärmetauscher oder Spiral- oder gewickelter Wärmetauscher. Ferner ist es auch denkbar, dass der Apparat insbesondere als eine Kolonne (hohle, schlanke Säule mit Einbauten) oder als Phasentrennapparat (Behälter mit Einbauten) ausgebildet ist. Der Apparat weist insbesondere wenigstens zwei in Kontakt stehende Körper auf.

Im Rahmen des Verfahrens wird eine theoretische, insbesondere numerische, Simulation des Apparats oder zumindest eines Teils des Apparats durchgeführt. In der theoretischen Simulation wird wenigstens ein Element des Apparats, welches keinen Beton als Werkstoff aufweist, durch wenigstens ein aus Beton gefertigtes Betonelement ersetzt bzw. dargestellt und mit Hilfe der theoretischen Simulation wird eine Belastungsanalyse des Apparats durchgeführt.

Die Simulation kann beispielsweise im Zuge einer Planungs- bzw. Auslegungsphase erstellt und durchgeführt werden, bevor der Apparat gebaut und in Betrieb genommen wird, beispielsweise um eine Dimensionierung bzw. konstruktive Gegebenheiten des geplanten Apparats zu testen und zu untersuchen. Ebenso ist es denkbar, dass der Apparat bereits in Betrieb genommen ist und dass mit Hilfe der Simulation der laufende Betrieb des Apparats überwacht oder dessen zukünftige Entwicklung untersucht werden soll, beispielsweise um sich andeutende Beschädigungen frühzeitig erkennen zu können.

Im Zuge der Belastungsanalyse wird insbesondere das Verhalten des Apparats unter Belastungen untersucht. Derartige Belastungen können beispielsweise während des Betriebs des Apparats auftreten, z.B. aufgrund der auf den Apparat wirkenden Temperatur- und Druckveränderungen. Ebenso kann es sich zweckmäßigerweise um Belastungen handeln, die auftreten, wenn der Apparat außer Betrieb ist und nicht gefahren wird, beispielsweise um mechanische Belastungen, die der Apparat aufgrund seines eigenen Gewichts erfährt, etwa mechanische Spannungen, Verformungen, Dehnungen, usw.

Im Rahmen der vorliegenden Erfindung wurde nun erkannt, dass spezifische Elemente des Apparats, welche aus einem anderen Werkstoff als Beton gefertigt sind, insbesondere aus einem Metall wie Lot bzw. Lötmittel, insbesondere bei Lötverbindungen, oder Stahl oder Aluminium, insbesondere bei Schweißverbindung, in der theoretischen Simulation durch aus Beton gefertigte Betonelemente angenähert bzw. simuliert werden können, da derartige Betonelement bzw. Beton als Werkstoff im Allgemeinen bezüglich auftretender Kräfte und Kraftübertragung an Kontaktstellen vergleichbare Eigenschaften aufweist wie metallische Kontaktstellen.

Beton und die Betonelemente besitzen insbesondere per se diejenigen Verhaltenseigenschaften bezüglich Belastungen, welche in der theoretischen Simulation für die entsprechenden Elemente insbesondere hinsichtlich eines Körperkontakts nachgebildet werden sollen. Simulation bzw. Berechnung entsprechender Kräfte und Kraftübertragung in Betonelementen erweist sich für numerische Berechnungsverfahren zweckmäßigerweise nicht als problematisch.

Durch das Ersetzen entsprechender Elemente des Apparats durch Betonelemente wird es nun ermöglicht, die Belastung in einem Körper des Apparats, insbesondere Verformungen oder Dehnungen aufgrund auftretender Kräfte bzw. Kraftübertragungen bei Kontakt mit einem anderen Körper, berechnen zu können, ohne dass es zu Konvergenzproblemen, Berechnungsabbrüchen oder gar nicht lösbaren Problemen für die Simulation und deren Algorithmen kommt. Die Erfindung ermöglicht somit eine zuverlässige theoretische Analyse des fluiddurchströmten verfahrenstechnischen Apparats.

Vorteilhafterweise ist das wenigstens eine Element wenigstens ein Kontaktelement, durch welches Kräfte zwischen zwei benachbarten Elementen übertragen werden. Insbesondere ist das wenigstens eine Kontaktelement nicht physisch bzw. körperlich von den benachbarten Elementen getrennt, sondern steht direkt mit diesen in physischer Verbindung. Insbesondere ist jedes der benachbarten Elemente Teil unterschiedlicher Körper, die mittels des Kontaktelements Kräfte austauschen und sich dort insbesondere berühren oder verbunden sind. Beispielsweise kann der Apparat für die theoretische Simulation konzeptionell in seine Bestandteile (Körper) unterteilt werden, wobei jeder Bestandteil wiederum in verschiedene kleine Elemente unterteilt wird, wobei jegliche Kontaktstellen zwischen den Bestandteilen mittels Kontaktelementen simuliert werden. Kontaktelemente, welche also Kräfte zwischen benachbarten Körpern übertragen, insbesondere Kräfte, die bzw. deren Übertragung zu Verformungen oder Dehnungen führen können, werden zweckmäßigerweise als entsprechende Betonelemente simuliert.

Gemäß einer bevorzugten Ausführungsform weisen das wenigstens eine Element und das wenigstens eine Betonelement dieselben oder zumindest im Wesentlichen dieselben Eigenschaften bezüglich Kraftübertragung auf benachbarte Elemente auf. Unter denselben oder zumindest im Wesentlichen dieselben Eigenschaften sei in diesem Zusammenhang insbesondere zu verstehen, dass sich ein Kraftunterschied für das wenigstens eine Element und ein Kraftunterschied für das wenigstens eine Betonelement um nicht mehr als einen vorgegebenen Wert unterscheiden, insbesondere nicht mehr als max. 5%, ferner insbesondere max. 3%, weiter insbesondere max. 1%. Als dieser Kraftunterschied ist insbesondere ein Unterschied zwischen einer auf das jeweilige Element bzw. Betonelement wirkenden Kraft und einer auf dessen benachbartes Element wirkenden Kraft zu verstehen.

Somit sind insbesondere Eigenschaften des Elements und des entsprechenden Betonelements miteinander vergleichbar, welche für die Belastungsanalyse von Bedeutung sind. Durch Ersetzen des jeweiligen Elements durch das entsprechende Betonelement kann im Zuge der theoretischen Simulation zweckmäßigerweise das Verhalten des Apparats unter Krafteinwirkungen untersucht werden, insbesondere bei welchen Kräften es zu einem Bruch, einem Defekt oder einer Öffnung des Apparats kommt. Insbesondere kommt es sowohl bei dem Element als auch bei dem entsprechenden Betonelement jeweils bei derselben oder zumindest im Wesentlichen bei derselben Kraftübertragung zu einem Bruch, einem Defekt oder einer Öffnung, wobei sich auch hier diese Kraftübertragungen um nicht mehr als einen vorgegebenen Wert unterscheiden, insbesondere nicht mehr als max. 5%, ferner insbesondere max. 3%, weiter insbesondere max. 1%.

Vorzugsweise weist das wenigstens eine Betonelement die Eigenschaft auf, Druckkräfte vollständig oder zumindest im Wesentlichen vollständig auf wenigstens ein benachbartes Element zu übertragen. Insbesondere werden Druckkräfte mindestens zu 95%, bevorzugt mindestens zu 97%, weiter bevorzugt mindestens zu 99% von dem Betonelement übertragen. Somit werden Druckkräfte von dem Betonelement, wie insbesondere auch von dem entsprechenden ersetzen Element, vollständig übertragen und haben insbesondere keinen oder zumindest kaum Anteil an einem Bruch bzw. Öffnen des Apparats.

Besonders bevorzugt weist das wenigstens eine Betonelemente die Eigenschaft auf, Zugkräfte auf wenigstens ein benachbartes Element bis zu einem vorgebbaren Schwellwert zu übertragen. Im Gegensatz zu Druckkräften werden Zugkräfte somit insbesondere nicht vollständig und ungehindert übertragen, sondern nur bis zu dem Schwellwert, welcher in der Simulation insbesondere als ein Eingangsparameter eingestellt und variiert werden kann. Insbesondere kann somit die simulierte Übertragungseigenschaft von Zugkräften des Betonelements an die entsprechende Eigenschaft des jeweiligen ersetzten Elements angepasst werden.

Vorteilhafterweise repräsentiert der vorgebbare Schwellwert einen Bruch des Apparats. Als Bruch sei insbesondere ein Schaden bzw. eine Beschädigung zu verstehen, welche zu einem Ausfall des Apparats und zu Wartung, Reparatur oder Ersatz von Teilen führen kann, was wiederum mit großen Kosten verbunden sein kann. Ein derartiger Bruch kann vorzugsweise ein Öffnen einer Struktur sein, beispielsweise eine Rissbildung, ein Abheben eines Elements von einem ursprünglich mit diesem verbundenen Nachbarelement, das Lösen einer Verbindung, etwa einer Schweiß-, Löt-, Schraubverbindung, usw.

Insbesondere können somit mit Hilfe der Betonelemente und des Schwellwerts verschiedene Materialien mit unterschiedlichen Zugkraftübertragungseigenschaften für das entsprechende ersetzte Element simuliert und deren Verhalten in dem Apparat untersucht werden, insbesondere dahingehend, ob und, wenn ja, wann es durch die Verwendung dieser Materialien zu einem Bruch kommt. Somit können etwa im Zuge einer Planungs- und Auslegungsphase des Apparats verschiedene Auslegungen bzw. konstruktive Varianten des Apparats getestet und insbesondere auf Verbesserungspotential hin untersucht werden, um für den Apparat einen möglichst fehlerfreien Betrieb zu ermöglichen, ohne dass es zu unerwünschten, kostenintensiven Brüchen kommt.

Je nach Wahl des zu ersetzenden Elements sowie des ersetzenden Betonelements und des jeweiligen Schwellwerts können mit Hilfe der Simulation Belastungsanalysen an verschiedenen, insbesondere für Brüche anfälligen Stellen nachgebildet werden, wie nachfolgend anhand von drei besonders bevorzugten Ausführungsformen erläutert werden soll.

Vorteilhafterweise ist das wenigstens eine Element Teil eines Flansches oder einer Flanschverbindung, insbesondere einer Flanschdichtung. In der Simulation wird dieser insbesondere aus Metall, z.B. aus Stahl oder Aluminium, gefertigte Teil des Flansches zweckmäßigerweise durch ein adäquates Element aus Beton ersetzt. Vorteilhafterweise repräsentiert der vorgebbare Schwellwert eine Leckage einer Flanschdichtung. Für eine Dichtheit erfordert eine derartige Flanschverbindung insbesondere eine bestimmte Flächenpressung, insbesondere durch Druckkräfte. Wird diese unterschritten oder aufgehoben, ist von einer Leckage auszugehen. Durch die Betonelemente ist die Berechenbarkeit dieses Zustandes einfach, präzise und schnell möglich. Insbesondere kann im Zuge der Simulation eine Flächenpressungsverteilung über der Flanschdichtung analysiert werden. Durch eine Neigung der Flanschdichtflächen kann beispielsweise nur der äußere Bereich der Dichtung gedrückt werde, wodurch sich die gesamte Kraftverteilung ändern kann, was wiederum Auswirkungen auf die Dichtheit des Flansches haben kann. Auch diese ist durch die Betonelemente einfach zu simulieren und analysieren.

Gemäß einer bevorzugten Ausgestaltung ist der Apparat als ein Plattenwärmetauscher, insbesondere als vakuumgelöteter (z.B. Aluminium-) Plattenwärmeübertrager (engl. "plate fin heat exchanger", PFHE) ausgebildet. Das wenigstens eine Element ist in diesem Fall vorzugsweise Teil einer Verbindung von Körpern des Plattenwärmeübertragers, bevorzugt Teil einer Lötverbindung. Eine derartige Lötverbindung kann insbesondere zwischen einer Platte bzw. einem Trennblech (engl. "plate") und einem Profil bzw. einer Finne (engl. "fin") sein.

Der vorgebbare Schwellwert repräsentiert vorteilhafterweise ein Öffnen bzw. Trennen von Trennblechen und Profilen des als Plattenwärmeübertrager ausgebildeten Apparats. Beim Löten von Plattenwärmeübertragern kann es oftmals beim Aufheizen bzw. Abkühlen zu einer ungleichmäßigen Temperaturverteilung innerhalb eines Blocks des Plattenwärmeübertragers kommen. Dies kann aufgrund unterschiedlicher thermischer Dehnungen und daraus resultierender Verformungsunterschiede zu Spaltbildungen innerhalb des Blockes durch die losen oder nicht ausreichend fest verbundenen aufeinanderliegen Trennblechen und Profilen führen. Dies kann zu Problemen im Bereich der nicht ausreichend verlöteten Trennbleche und Profile führen. Mit Hilfe der theoretischen Simulation können derartige Bruchfälle im Zuge der Belastungsanalyse ausreichend untersucht werden, beispielsweise um beim Löten im Zuge des Herstellungsprozesses des Plattenwärmeübertragers derartige Fehler zu vermeiden oder um beispielsweise unzureichend gelötete Stellen nachzubessern.

Vorteilhafterweise kann der Apparat als ein Spiral- oder gewickelter Wärmetauscher (engl. "coil-wound heat exchanger", CWHE) ausgebildet sein. In diesem Fall ist das wenigstens eine Element vorzugsweise Teil einer Verbindung zwischen Rohren eines Bündels des Wärmetauschers, welches insbesondere eine Vielzahl von einzelnen Rohren bzw. Leitungen umfasst. Ferner ist das wenigstens eine Element bevorzugt Teil eines Bündelendes, weiter bevorzugt eines freihängenden Bündelendes. Die einzelnen Rohre eines Bündels sind in einem derartigen Wärmetauscher z.B. spiralförmig um einen Kern oder ein Kernrohr gewickelt. An ihren Enden können die einzelnen Rohre jeweils mit einer Endplatte verbunden sein, etwa verschweißt oder verlötet. An dem Bündelende ist die Vielzahl der Rohre oftmals nicht mehr gestützt, z.B. nicht mehr durch Tragarme versteift, und hängt zumeist frei zwischen dem Kernrohr und der Endplatte.

Der vorgebbare Schwellwert repräsentiert vorteilhafterweise ein Öffnen eines Bündels, insbesondere an einem Bündelende des als Spiral- oder gewickelter Wärmetauscher ausgebildeten Apparats. Zu einem derartigen Öffnen kann es insbesondere durch die Biegung des Bündels unter seinem Eigengewicht kommen. Im Herstellungsprozess eines derartigen Wärmetauschers kann es beim Wickeln der Rohre um das Kernrohr durch das häufige Drehen in Verbindung mit dem Durchhängen am freien Bündelende zu einer Öffnung des Bündels kommen. Folgen können Bügelabrisse und daraus resultierend mögliche Rohrbeschädigungen im Zuge der Fertigung sein. Auch in diesem Fall können mit Hilfe der theoretischen Simulation derartige Bruchfälle ausreichend untersucht und beim Herstellungsprozess vermieden oder entsprechend nachgebessert werden.

Es versteht sich, dass der Apparat auch in alternativer zweckmäßiger Weise ausgestaltet sein kann, beispielsweise als Kolonne oder Behälter zur Phasentrennung. Wesentlich ist lediglich, dass Kontaktstellen zwischen Körpern des Apparats bestehen und diese mittels der Betonelemente modelliert werden. Insbesondere eignet sich das Verfahren besonders für Kontaktstellen, bei welchen sich eine Trennung, eine Öffnung bzw. ein Bruch einstellen kann.

Gemäß einer bevorzugten Ausführungsform wird als Belastungsanalyse eine Spannungs-, Verformungs- und/oder Temperaturfeldanalyse des Apparats durchgeführt. Insbesondere können somit jeweils mechanische Spannungen, Verformungen bzw. Dehnungen und/oder Verteilung des Temperaturfeldes innerhalb des Apparats untersucht werden, ferner insbesondere zwischen dem wenigstens einen Element und dessen Nachbarelementen, weiter insbesondere zwischen sämtlichen Elementen des Apparats. Besonders bevorzugt wird im Zuge der Belastungsanalyse ein Verhalten des Apparats unter Belastung bis hin zu einem Bruch untersucht. Vorzugsweise wird als die theoretische Simulation des Apparats oder zumindest des Teils des Apparats eine Finite-Elemente-Methode durchgeführt. Die Finite-Elemente-Methode (FEM) ist ein numerisches Verfahren, welches auf dem numerischen Lösen eines komplexen Systems aus partiellen Differentialgleichungen basiert. Der Apparat wird dabei in endlich viele Teilgebiete einfacher Form aufgeteilt, sprich in finite Elemente, deren physikalisches bzw. thermo-hydraulisches Verhalten aufgrund ihrer einfachen Geometrie berechnet werden kann. In jedem der finiten Elemente werden die partiellen Differentialgleichungen durch einfache Differentialgleichungen oder durch algebraische Gleichungen ersetzt. Das somit erhaltene System aus Gleichungen wird gelöst, um eine Näherungslösung der partiellen Differentialgleichungen zu erhalten. Das physikalische Verhalten des Gesamtkörpers wird beim Übergang von einem Element in das benachbarte Element durch vorbestimmte Stetigkeitsbedingungen nachgebildet. Dies ist grundsätzlich bekannt und verbreitet und man kann sich hierzu am Markt erhältlicher Software-Lösungen bedienen. Im Rahmen der vorliegenden Erfindung wird nun jedoch wenigstens ein finites Element dieser finiten Elemente, insbesondere ein finites Kontaktelement, durch wenigstens ein Betonelement dargestellt.

Eine erfindungsgemäße Recheneinheit, z.B. ein Steuergerät eines Apparats, ist, insbesondere programmtechnisch, dazu eingerichtet, ein erfindungsgemäßes Verfahren durchzuführen.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere magnetische, elektrische und optische Datenträger, wie Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung
- Figur 1: zeigt schematisch und perspektivisch einen als Plattenwärmetauscher ausgebildeten fluiddurchströmten verfahrenstechnischen Apparat, der gemäß einer bevorzugten Ausführungsform eines erfindungsgemäßen Verfahrens analysiert werden kann.
- Figur 2: zeigt schematisch eine bevorzugte Ausführungsform eines erfindungsgemäßen Verfahrens als ein Blockdiagramm.

### Detaillierte Beschreibung der Zeichnung

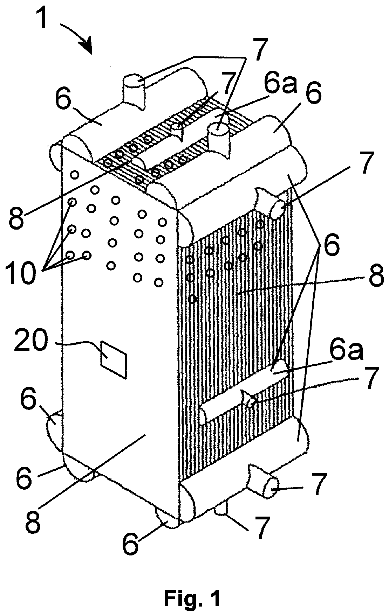

Figur 1 zeigt einen hier als Plattenwärmetauscher 1 ausgebildeten verfahrenstechnischen Apparat von außen.

Eine Recheneinheit 20, beispielsweise ausgebildet als ein Steuergerät, ist zur Steuerung bzw. Regelung des Plattenwärmetauschers vorgesehen. Ferner ist der Plattenwärmetauscher 1 mit ausreichend vielen Sensoren 10 ausgestattet, beispielsweise Druck- und/oder Temperatursensoren 10, um Messwerte für die Steuerung bzw. Regelung zu erfassen.

Der Plattenwärmetauscher 1 weist einen quaderförmigen Zentralkörper 8 mit einer Länge von beispielsweise mehreren Metern und einer Breite bzw. Höhe von beispielsweise etwa einem bzw. wenigen Metern auf. Oben auf dem Zentralkörper 8, an dessen Seiten und unterhalb des Zentralkörpers 8 erkennt man Aufsätze 6 und 6a.

Die unterhalb des Zentralkörpers 8 und auf der der abgebildeten Seite abgewandten Seite befindlichen Aufsätze 6 und 6a sind teilweise verdeckt.

Durch Stutzen 7 kann dem Plattenwärmetauscher 1 ein Fluid bzw. Prozessstrom zugeführt bzw. diesem wieder entnommen werden. Die Aufsätze 6 und 6a dienen zur Verteilung des durch die Stutzen 7 eingebrachten Fluids bzw. zum Sammeln und zur Konzentration des aus dem Plattenwärmetauscher 1 zu entnehmenden Fluids. Innerhalb des Plattenwärmetauschers 1 tauschen dann die verschiedenen Fluidströme Wärmeenergie aus.

Der in Figur 1 gezeigte Plattenwärmetauscher 1 ist dazu ausgelegt, Fluidströme in getrennten Passagen zum Wärmeaustausch aneinander vorbeizuführen. Ein Teil der Ströme kann gegensinnig aneinander vorbeigeführt werden, ein anderer Teil über Kreuz oder gleichsinnig.

Im Wesentlichen handelt es sich bei dem Zentralkörper 8 um eine Anordnung aus Trennblechen, Wärmeaustauschprofilen (sog. Fins) und Verteilerprofilen. Beispielsweise sind zahlreiche Profile zwischen zwei Trennblechen angeordnet und mit diesen verbunden. Trennbleche und Profile aufweisende Schichten wechseln sich ab. Eine ein Wärmeaustauschprofil und Verteilerprofile aufweisende Schicht wird Passage genannt.

An den Seiten des Plattenwärmetauschers 1 weisen die Verteilerprofile Verteilerprofilzugänge (sog. Header oder Halbschalen) auf. Durch diese kann von außen das Fluid in die zugehörigen Passagen über die Aufsätze 6 und 6a und Stutzen 7 eingebracht bzw. auch wieder entnommen werden. Die Verteilerprofilzugänge werden durch die Aufsätze 6 bzw. 6a verdeckt.

Der Zentralkörper 8 weist also abwechselnd parallel zu den Strömungsrichtungen liegende Passagen und Trennbleche auf. Sowohl die Trennbleche als auch die Passagen sind meist aus Aluminium gefertigt. Zu ihren Seiten sind die Passagen durch Seitenleisten aus Aluminium abgeschlossen, so dass durch die Stapelbauweise mit den Trennblechen eine Seitenwand ausgebildet ist. Die außenliegenden Passagen des Zentralkörpers 8 sind durch eine parallel zu den Passagen und den Trennblechen liegende Abdeckung aus Aluminium (Deckblech) abgeschlossen.

Ein solcher Zentralkörper 8 kann hergestellt werden z.B. durch Aufbringen eines Lots auf die Flächen der Trennbleche und anschließendes abwechselndes Aufeinanderstapeln der Trennbleche und der Passagen. Die Abdeckungen decken den Zentralkörper 8 nach oben oder unten ab. Anschließend wird der Zentralkörper durch Erhitzen in einem Ofen verlötet.

Bei einem derartigen Löten entsteht beim Aufheizen bzw. Abkühlen eine ungleichmäßige Temperaturverteilung innerhalb des Zentralkörpers 8. Dies kann aufgrund der unterschiedlichen thermischen Dehnungen und der daraus resultierenden Verformungsunterschiede zu Spaltbildungen innerhalb des Zentralkörpers 8 durch lose oder noch nicht ausreichend fest verbundene Profile und Trennbleche führen. Dadurch können bei späteren Druckproben Probleme im Bereich der nicht ausreichend verlöteten Lagen resultieren. So können beispielsweise an einem derartig gelöteten Block bzw. Zentralkörper 8 Probleme durch Bildung von Beulen aufgrund unzureichend verlöteter Bereiche im Inneren auftreten.

Im Rahmen einer bevorzugten Ausgestaltung der Erfindung soll eine theoretische Analyse des Plattenwärmetauschers 1 durchgeführt werden, beispielsweise im Zuge einer Planungs- bzw. Auslegungsphase, um vor dem Bau und der Inbetriebnahme verschiedene konstruktive Varianten des Plattenwärmetauschers 1 zu testen und auf Verbesserungspotential hin zu untersuchen. Insbesondere soll der Plattenwärmetauscher 1 im Zuge dieser Analyse dahingehend untersucht werden, ob und wenn ja, wann es zu einem Öffnen bzw. zu einem Bruch in Form der Spaltbildungen innerhalb des Zentralkörpers 8 durch lose oder nicht ausreichend verbundene aufeinanderliege Lagen kommen kann.

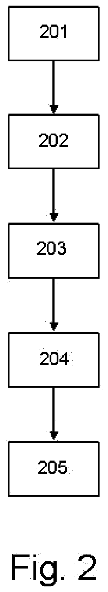

In Figur 2 ist eine bevorzugte Ausführungsform des erfindungsgemäßen Verfahrens als ein Blockdiagramm schematisch dargestellt.

In einem Schritt 201 wird eine theoretische, numerische Simulation des Plattenwärmetauschers 1 oder zumindest eines Teils des Apparats durchgeführt. Zu diesem Zweck wird eine Finite-Elemente-Methode durchgeführt, im Zuge derer der Plattenwärmetauscher 1 in eine Vielzahl einzelner Teilgebiete bzw. finiter Elemente unterteilt wird, deren physikalisches bzw. thermo-hydraulisches Verhalten aufgrund ihrer einfachen Geometrie berechnet werden kann.

Einzelne dieser finiten Elemente sind jeweils Teil eines Trennblechs oder eines Profils. Die Löt-Kontaktstellen zwischen Trennblech und Profil werden mittels finiter Kontaktelemente dargestellt.

Im Zuge herkömmlicher numerischer Simulationen können derartige Lötverbindungen mit Kontaktelementen numerisch simuliert werden, mittels welchen der Körperkontakt und die Übertragung der dabei auftretenden Kräfte rechnerisch erfasst werden. Dies kann jedoch mit erheblichen Problemen verbunden sein, da die Natur dieser Berechnung nichtlinear ist, was zu Konvergenzproblemen und Berechnungsabbrüchen führen kann. Insbesondere kann hierbei das nicht lösbare Problem auftreten, dass die Kontakttoleranzen für eine akzeptable Genauigkeit idealerweise im Bereich einiger Mikrometer liegen sollte. Verformungen des Zentralkörpers können aber im Bereich von Millimetern liegen. Dies kann zu unüberwindbaren Hürden im Zuge der rechnerischen Simulationen führen.

Im Rahmen des Verfahrens werden in Schritt 202 die einzelnen finiten Elemente, die eine Lötverbindung von zwei Körpern beschreiben, jeweils als finites Beton-Kontaktelement vorgesehen. Das jeweilige ersetzende Betonelement ist insbesondere in Form, Volumen und Masse adäquat zu dem ersetzen Element, besteht jedoch im Gegensatz zu dem ersetzen Kotaktelement nicht aus Lot, sondern aus Beton als Werkstoff.

In Schritt 203 wird in der Simulation ein Schwellwert eingestellt bzw. vorgegeben. Beton bzw. die Betonelemente haben insbesondere die Eigenschaft, Druckkräfte vollständig zu übertragen, aber keine oder nur geringe Zugkräfte, weil der Beton sonst bricht. Bis zu dem vorgegebenen Schwellwert übertragen die Betonelemente in der Finite-Elemente-Simulation Zugkräfte jeweils vollständig. Ab Erreichen des Schwellwerts übertragen die Betonelemente keine Zugkräfte mehr und das jeweilige Betonelement bricht.

Somit repräsentiert dieser vorgebbare Schwellwert in der Finite-Elemente-Methode einen Bruch des Plattenwärmetauschers 1, im Speziellen das Öffnen einer Struktur, namentlich das Öffnen bzw. Lösen einer Passage bzw. eines Profils vom Trennblech, zu welchem es insbesondere im Zuge des Aufheizens bzw. Abkühlen des Zentralkörpers 8 kommt.

Die Belastungsgrenze, ab der sich das Betonelement öffnet bzw. bricht ist einstellbar.

In Schritt 204 wird die Finite-Elemente-Methode gemäß den in Schritt 203 vorgegebenen Schwellwerten durchgeführt und der Plattenwärmetauscher 1 wird numerisch simuliert. Mit Hilfe dieser theoretischen Simulation wird eine Belastungsanalyse des Plattenwärmetauscher 1 durchgeführt, im Speziellen eine Spannungs-, Verformungs- und Temperaturfeldanalyse.

Im Zuge dieser Temperaturfeldanalyse wird insbesondere die ungleichmäßige Temperaturverteilung in dem Zentralkörper 8 simuliert und analysiert, zu welcher es bei dem Erstellen der Lötverbindungen von Trennblechen und Passagen durch Aufheizen und anschließende Abkühlen kommt. Im Zuge der Spannungs- und Verformungsanalyse werden die unterschiedlichen thermischen Dehnungen in dem Zentralkörper 8 simuliert und analysiert, zu welchen es aufgrund der ungleichmäßigen Temperaturverteilung kommen kann. Ferner werden die aus den unterschiedlichen thermischen Dehnungen resultierenden Verformungsunterschiede in dem Zentralkörper 8 simuliert und analysiert.

Insbesondere wird somit im Zuge dieser Belastungsanalyse simuliert und analysiert, ob es bei der gewählten Auslegung bzw. Dimensionierung des simulierten Plattenwärmetauschers aufgrund der auftretenden ungleichmäßigen Temperaturverteilung, der unterschiedlichen thermischen Dehnungen und der Verformungsunterschiede letztlich zu einer Spaltbildung innerhalb des Zentralkörpers 8 kommt, also zu einem Bruch bzw. Lösen der Verbindung zwischen Trennblechen und Passagen.

Diese Ergebnisse der Finite-Elemente-Methode können in Schritt 205 für die Herstellung und die Inbetriebnahme des Plattenwärmetauschers 1 verwendet werden, um das Auftreten derartiger Brüche zu vermeiden.

## Patentansprüche

1. Verfahren zur theoretischen Analyse eines fluiddurchströmten verfahrenstechnischen Apparats (1),
wobei eine theoretische, insbesondere numerische, Simulation des Apparats (1) oder zumindest eines Teils des Apparats (1) durchgeführt wird (201),
wobei mit Hilfe der theoretischen Simulation eine Belastungsanalyse des Apparats durchgeführt wird (204),
**dadurch gekennzeichnet,**
**dass** wenigstens ein Element des Apparats (1), welches keinen Beton als Werkstoff aufweist, in der theoretischen Simulation durch wenigstens ein aus Beton gefertigtes Betonelement ersetzt wird (202).

2. Verfahren nach Anspruch 1, wobei als die theoretische Simulation des Apparats oder zumindest des Teils des Apparats eine Finite-Elemente-Methode durchgeführt wird (201) und das wenigstens eine Element ein finites Element ist.

3. Verfahren nach Anspruch 1 oder 2, wobei das wenigstens eine Element wenigstens ein Kontaktelement ist, durch welches Kräfte zwischen benachbarten Elementen übertragen werden (202).

4. Verfahren nach einem der vorstehenden Ansprüche, wobei das wenigstens eine Element und das wenigstens eine Betonelement dieselben oder zumindest im Wesentlichen dieselben Eigenschaften bezüglich Kraftübertragung auf benachbarte Elemente aufweisen (202, 203).

5. Verfahren nach einem der vorstehenden Ansprüche, wobei das wenigstens eine Betonelement die Eigenschaft aufweist, Druckkräfte vollständig oder zumindest im Wesentlichen vollständig auf wenigstens ein benachbartes Element zu übertragen (203).

6. Verfahren nach einem der vorstehenden Ansprüche, wobei das wenigstens eine Betonelemente die Eigenschaft aufweist, Zugkräfte auf wenigstens ein benachbartes Element bis zu einem vorgebbaren Schwellwert zu übertragen (203).

7. Verfahren nach Anspruch 6, wobei der vorgebbare Schwellwert einen Bruch des Apparats (1) repräsentiert, insbesondere ein Öffnen einer Struktur (203).

8. Verfahren nach Anspruch 6 oder 7, wobei der vorgebbare Schwellwert
eine Leckage einer Flanschdichtung repräsentiert und/oder
ein Öffnen von Lagen des als Plattenwärmeübertrager ausgebildeten Apparats (1) repräsentiert (203) und/oder
ein Öffnen eines Bündels, insbesondere an einem Bündelende, des als Spiral- oder gewickelter Wärmetauscher ausgebildeten Apparats repräsentiert.

9. Verfahren nach einem der vorstehenden Ansprüche, wobei als Belastungsanalyse eine Spannungs-, Verformungs- und/oder Temperaturfeldanalyse des Apparats durchgeführt wird (204).

10. Verfahren nach einem der vorstehenden Ansprüche, wobei der fluiddurchströmte verfahrenstechnischer Apparat (1) als ein Wärmetauscher, insbesondere als ein Plattenwärmeübertrager oder Spiral- oder gewickelter Wärmetauscher, oder als eine Kolonne oder als ein Behälter zur Phasentrennung ausgebildet ist.

11. Recheneinheit mit Mitteln zum Durchführen eines Verfahrens nach einem der vorstehenden Ansprüche.

12. Computerprogramm, das eine Recheneinheit dazu veranlasst, ein Verfahren nach einem der Ansprüche 1 bis 10 durchzuführen, wenn es auf der Recheneinheit ausgeführt wird.

13. Maschinenlesbares Speichermedium mit einem darauf gespeicherten Computerprogramm nach Anspruch 12.

## Claims

1. Method for the theoretical analysis of a procedural apparatus (1) with fluid flowing through it,
wherein a theoretical, in particular numerical, simulation of the apparatus (1) or at least of a part of the apparatus (1) is carried out (201),
wherein a load analysis of the apparatus is carried out with the aid of the theoretical simulation (204),
**characterized in that**
at least one element of the apparatus (1) which does not contain concrete as a material is replaced in the theoretical simulation by at least one concrete element made of concrete (202).

2. Method according to Claim 1, wherein a finite element method is carried out as the theoretical simulation of the apparatus or at least of the part of the apparatus (201), and the at least one element is a finite element.

3. Method according to Claims 1 or 2, wherein the at least one element is at least one contact element by means of which forces are transmitted between adjacent elements (202).

4. Method according to any one of the preceding claims, wherein the at least one element and the at least one concrete element have the same or at least substantially the same properties relating to force transmission to adjacent elements (202, 203).

5. Method according to any one of the preceding claims, wherein the at least one concrete element has the property of transmitting compressive forces completely or at least substantially completely to at least one adjacent element (203).

6. Method according to any one of the preceding claims, wherein the at least one concrete element has the property of transmitting tensile forces to at least one adjacent element up to a prespecifiable threshold value (203).

7. Method according to Claim 6, wherein the prespecifiable threshold value represents a fracture of the apparatus (1), in particular an opening of a structure (203).

8. Method according to Claim 6 or 7, wherein the prespecifiable threshold value represents a leakage of a flange seal and/or
represents an opening of layers of the apparatus (1) designed as a plate heat exchanger (203) and/or
represents an opening of a bundle, in particular at a bundle end, of the apparatus designed as a spiral or wound heat exchanger.

9. Method according to any one of the preceding claims, wherein a stress analysis, deformation analysis and/or temperature field analysis of the apparatus is carried out as the load analysis (204).

10. Method according to any one of the preceding claims, wherein the procedural apparatus (1) with fluid flowing through it is designed as a heat exchanger, in particular as a plate heat exchanger or spiral or wound heat exchanger, or as a column or as a container for phase separation.

11. Computing unit with means for carrying out a method according to any one of the preceding claims.

12. Computer program that causes a computing unit to carry out a method according to any one of Claims 1 to 10 when executed on the computing unit.

13. A machine-readable storage medium having a computer program according to Claim 12 stored thereon.

## Revendications

1. Procédé permettant l'analyse théorique d'un appareil (1) technique traversé par un fluide,
dans lequel une simulation théorique, en particulier numérique, de l'appareil (1) ou au moins d'une partie de l'appareil (1) est effectuée (201),
dans lequel une analyse de charge de l'appareil est effectuée (204) à l'aide de la simulation théorique,
**caractérisé en ce**
**qu'**au moins un élément de l'appareil (1) ne présentant pas de béton en tant que matériau est remplacé (202) dans la simulation théorique par au moins un élément en béton fabriqué à partir de béton.

2. Procédé selon la revendication 1, dans lequel une méthode des éléments finis est effectuée (201) en tant que simulation théorique de l'appareil ou d'au moins de la partie de l'appareil et l'au moins un élément est un élément fini.

3. Procédé selon la revendication 1 ou 2, dans lequel l'au moins un élément est au moins un élément de contact par lequel des forces sont transmises (202) entre des éléments adjacents.

4. Procédé selon l'une des revendications précédentes, dans lequel l'au moins un élément et l'au moins un élément en béton présentent (202, 203) les mêmes propriétés, ou au moins sensiblement les mêmes propriétés, concernant la transmission de force à des éléments adjacents.

5. Procédé selon l'une des revendications précédentes, dans lequel l'au moins un élément en béton présente la propriété permettant de transférer (203) complètement ou au moins sensiblement complètement des forces de compression à au moins un élément adjacent.

6. Procédé selon l'une des revendications précédentes, dans lequel l'au moins un élément en béton présente la propriété permettant de transmettre (203) des forces de traction à au moins un élément adjacent jusqu'à une valeur seuil pouvant être prédéterminée.

7. Procédé selon la revendication 6, dans lequel la valeur seuil pouvant être prédéterminée représente une rupture de l'appareil (1), en particulier une ouverture d'une structure (203).

8. Procédé selon la revendication 6 ou 7, dans lequel la valeur seuil pouvant être prédéterminée représente une fuite d'un joint à bride et/ou
représente (203) une ouverture de couches de l'appareil (1) conçu comme un échangeur de chaleur à plaques et/ou
représente une ouverture d'un faisceau, en particulier au niveau d'une extrémité de faisceau, de l'appareil conçu comme un échangeur de chaleur spiralé ou enroulé.

9. Procédé selon l'une des revendications précédentes, dans lequel une analyse de champ de contrainte, de déformation et/ou de température de l'appareil est effectuée (204) en tant qu'analyse de charge.

10. Procédé selon l'une des revendications précédentes, dans lequel l'appareil (1) technique traversé par un fluide est conçu en tant qu'échangeur de chaleur, en particulier en tant qu'échangeur de chaleur à plaques ou échangeur de chaleur spiralé ou enroulé, ou en tant que colonne ou en tant que récipient pour la séparation de phases.

11. Unité de calcul comportant des moyens permettant d'effectuer un procédé selon l'une des revendications précédentes.

12. Programme informatique qui amène une unité de calcul à effectuer un procédé selon l'une des revendications 1 à 10 lorsqu'il est exécuté sur l'unité de calcul.

13. Support de stockage lisible par machine sur lequel est stocké un programme informatique selon la revendication 12.
